# EUROPEAN PATENT SPECIFICATION

(11) **EP 1 331 722 B1**
(45) Date of publication and mention of the grant of the patent: **20.01.2010**
(21) Application number: 02400005.1
(22) Date of filing: 26.01.2002
(51) Int. Cl.: H02M 3/335

(54) **Switched mode power supply**
Schaltnetzteil
Alimentation à découpage

(43) Date of publication of application: 30.07.2003
(73) Proprietor: Thomson Licensing, 92100 Boulogne-Billancourt (FR)
(72) Inventor: Zee, Kum Yoong, Johor Bahru, 81100 Johor (MY); Koh, Kian Meng, Singapore 731897 (SG)
(74) Representative: Arnold, Klaus-Peter

(56) References cited:
- EP-A- 1 058 375
- WO-A-98/21814
- US-A- 4 937 727
- US-A- 5 636 109
- US-A- 5 917 713
- BLAESNER W: "ERHOHTE BETRIEBSSICHERHEIT UND NIEDRIGERE KOSTEN" ELEKTRONIK, FRANZIS VERLAG GMBH. MUNCHEN, DE, vol. 39, no. 9, 27 April 1990 (1990-04-27), pages 134-140, XP000116204 ISSN: 0013-5658
- PATENT ABSTRACTS OF JAPAN vol. 1997, no. 05, 30 May 1997 (1997-05-30) & JP 09 023644 A (MATSUSHITA ELECTRIC IND CO LTD), 21 January 1997 (1997-01-21)

## Description

This invention concerns a switched mode power supply according to the preamble of claim 1. Such a switched mode power supply is generally called SMPS. A SMPS as it is commonly used, for example, in consumer devices like television receivers, video recorders, audio equipments etc. generally includes a main switching transistor connected in series with the primary winding of a transformer, a base drive circuit for periodically switching said switching transistor between ON and OFF, and a control circuit for controlling the base drive current for said main switching transistor in such a way that output voltages derived from several secondary windings of said transformer are stabilized.

In devices operating alternatively in a normal mode and a so-called standby mode it is common practice to reduce the base drive current for said main switching transistor in such a way that the operating voltages produced by the SMPS are decreased or are completely switched off. To achieve this, the duty cycle of the switching voltage controlling the base of the main switching transistor may be substantially reduced to a lower value yielding output voltages with reduced magnitude as needed for standby mode. Alternatively, a standby power supply can be provided, so that the SMPS is switched off completely in the standby mode.

On the other hand such a SMPS generally includes a protection circuit for case of overloading or a short circuit or any other failures within the operating voltages. Said protection circuit is needed since without protection means the collector-emitter current of the main switching transistor can reach excessively high values in case of a failure which might damage said switching transistor or cause any other damages of circuit components.

The implementation of the circuit for standby mode on the one hand and for the protection circuit on the other hand yields a relatively high complexity of the overall circuit requiring a high number of circuit components. Said high complexity requires additional costs and furthermore may affect the reliability of both circuits.

A switched mode power supply according to the preamble of claim 1 is disclosed in WO 98/21814.

It is an object of the present invention to reduce the overall complexity of said two circuits, also the number of circuit components needed and therefore to increase the reliability of the total circuit.

This object is achieved by the features as cited in claim 1. Advantageous embodiments of the invention are cited in the dependent claims.

According to the invention the switched mode power supply comprises a power switching transistor in series with the primary winding of a transformer and a further transistor arranged at the primary side of the power supply, and a standby control circuit arranged at the secondary side which is coupled to said further transistor for switching to stand-by mode in response to a standby switching signal. The SMPS is further provided with a protection circuit having an output terminal coupled to the standby control circuit for actuating also said transistor in the event of a fault and having a control input terminal connected to different output voltages which are generated by the switched mode power supply unit. The control input terminal is coupled to different control inputs of an XOR-gate of the protection circuit, and the XOR-gate has an output terminal which is coupled to the standby control circuit.

The circuit according to the invention exhibits a number of advantages. First, due to the combination of the standby control circuit and the protection circuit the complexity as well as the number of circuit components needed is substantially decreased. The level of protection is substantially improved by stopping the operation of the SMPS when any output voltage of several different output voltages is short-circuited or decreases excessively by any other reason. Furthermore, the hassle to replace a fuse every time when there is an accidentally short-circuit at the output voltage is removed thus achieving cost saving during development and manufacturing phase. Finally the operation of the circuit according to the invention is independent from any software.

For a better understanding of the invention exemplary embodiments of the invention are now described by way of the following description and the attached schematic figures. Within the figures
- Figure 1: shows a circuit diagram of a first embodiment of the invention,
- Figure 2: shows a circuit diagram of a modification of the circuit according to Figure 1,
- Figure 3: is a table showing the logic conditions at the two inputs and at the output of the XOR-gate used in the circuit of Figure 2,
- Figure 4: is a table showing the status of the circuit components in Figure 1 for the three operating modes standby, normal operation and protection activated, and
- Figure 5: is a table showing the status of the circuit components in Figure 2 for the three operating modes standby, normal operation and protection activated.

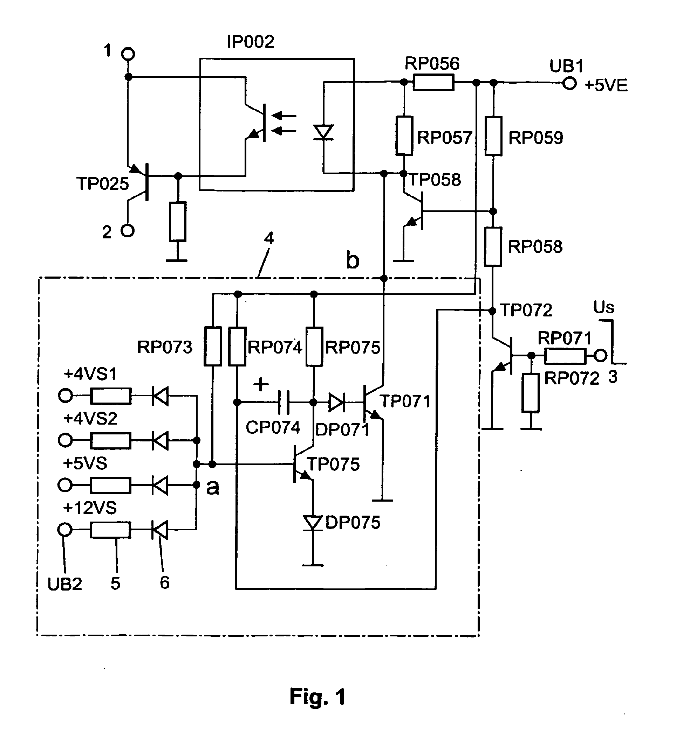

Figure 1 shows a switching transistor TP025 whose emitter/collector-path is connected via terminals 1, 2 in series with the base drive line for the main switching transistor (not shown) of a SMPS. The output of an opto-coupler IP002 is connected to the emitter/base-path of TP025. The opto-coupler IP002 is controlled by a transistor TP058 which itself is controlled by a further transistor TP072 controlled at its base by a standby switching voltage Us from a terminal 3. The opto-coupler IP002 is needed for assuring a galvanic separation between the primary side of the transformer (not shown) including TP025 and the secondary side of said transformer including the standby control circuit.

When the switching voltage Us at terminal 3 is low, transistor TP072 is closed, and therefore TP058 is conducting. The LED in the opto-copler IP002 is therefore on, and therefore transistor TP025 is not conducting. The SMPS will then stop operating or will go into standby mode. This circuit arranged at the secondary side so far constitutes the standby control circuit for the SMPS. In a preferred embodiment the SMPS is used in a television set, which comprises an additional stand-by power supply. The SMPS is then completely switched off via transistor TP025.

Furthermore, a protection circuit 4 being arranged at the primary side of the SMPS is connected to the standby control circuit. An input terminal a of the protection circuit 4 is connected via several series-circuits each including a resistor 5 and a diode 6 to different output voltages UB2, designated with +4VS1, +4VS2, +5VS and +12VS. The input terminal a of the protection circuit 4 is also connected via a circuit including transistors TP075 and TP071 and a capacitor CP074, introducing a delay, to an output terminal b which is connected to a control terminal of the opto-coupler IP002.

In the following the operation of this circuit will be described for the three operating modes, namely standby mode, normal operation mode and a mode with activated protection.

In standby mode, the switching voltage Us at terminal 3 is LOW. Thus transistor TP072 is turned off. Therefore transistor TP058 is turned on by operating voltage UB1 via resistor RP059. Thus transistor TP058 turns on opto-coupler IP002 whose output now establishes a short circuit for the base-emitter path of switching transistor TP025 so that TP025 is turned off. Thereby the base drive current for the main switching transistor (not shown) of the SMPS is reduced or switched off so that all output voltages UB2 produced by the SMPS are reduced in amplitude or are completely switched off as necessary for standby mode. The protection circuit 4 is not activated within this standby mode.

In normal operation mode, the switching voltage Us at terminal 3 is HIGH thus turning on transistor TP072. Thereby the voltage at the base of TP058 is decreased with the result that TP058 is turned off. Then also opto-coupler IP002 is turned off. Consequently transistor TP025 is turned on so that the nominal base drive current can flow now via terminals 1 and 2 of TP025 to the base of the main switching transistor (not shown) for normal operation mode generating output voltages UB2 with their nominal values. By said nominal values UB2 all diodes 6 of the protection circuit 4 are reverse biased, and TP075 is turned on via resistor RP073 thus turning off transistor TP071, so that TP071 has no influence on the operation of the opto-coupler IP002.

Within mode with activated protection, one or several of the output voltages UB2 have decreased substantially due to a short-circuit, an overloading or any other failure within the circuit. Since now the voltage at the cathode of one or more of the diodes 6 is decreased, one or several of diodes 6 become conductive. Thereby the voltage at terminal a is decreased also thus turning off transistor TP075 which now turns on transistor TP071. Thereby opto-coupler IP002 is turned on via terminal b with the result that, as already described, transistor TP025 is turned off thus reducing or interrupting base drive current to the main switching transistor and reducing the output voltages UB2 for purpose of protection of the SMPS.

The circuit described so far may exhibit the following undesired effect. In the moment of start-up of the SMPS the output voltages UB2 are low or zero. This fact is interpreted by the protection circuit 4 as a short circuit or any other failure, so that the protection circuit 4 would be activated and would turn off transistor TP025 so that the SMPS cannot start. To overcome this undesired effect a capacitor CP074 and resistors RP074 and RP075 are provided for introducing a time delay for the activation of the protection circuit 4 immediately after start-up. After start-up transistor TP071 remains turned off for a certain time due to the time-constant provided by said RC-circuit. During this time the SMPS is enabled to start-up and reaches its full operation mode yielding output voltages UB2 with their nominal values.

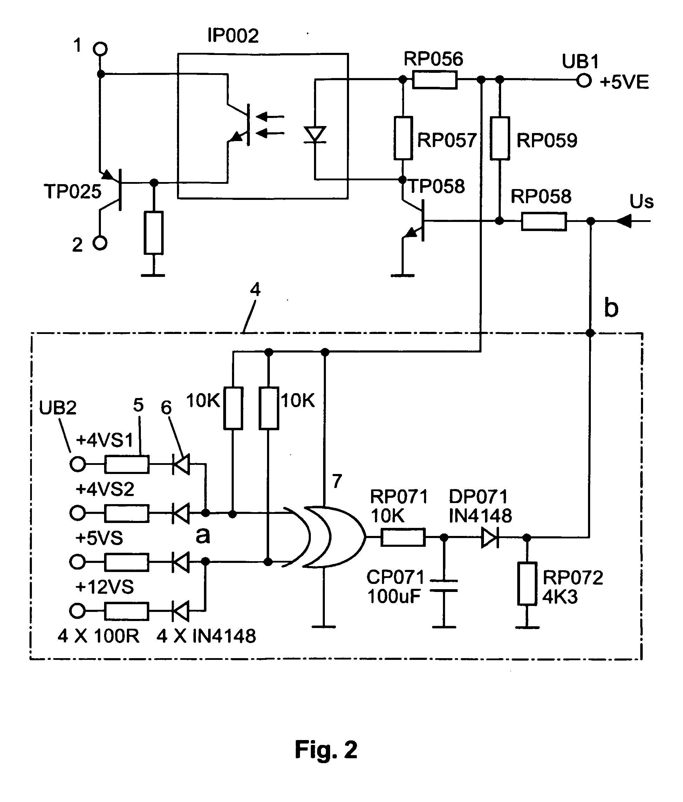

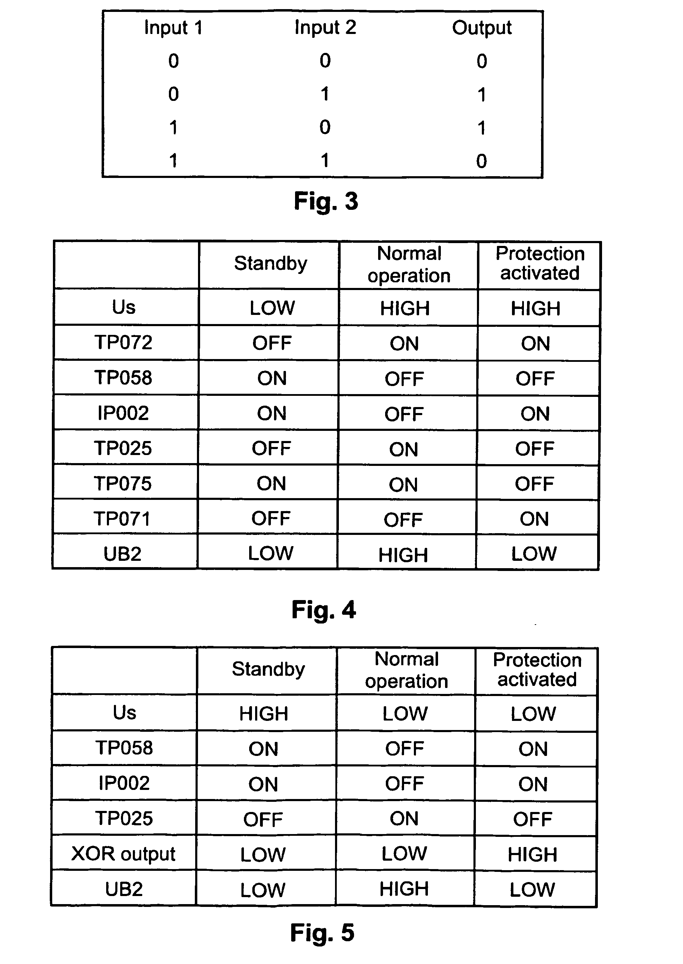

Figure 2 shows essentially the circuit of Figure 1. Therein the protection circuit 4 is modified in such a way that less components are needed to accomplish the same function as described with Figure 1. The circuit with transistors TP071 and TP075 and the associated circuit components of Figure 1 is replaced by a logic gate in form of an EXCLUSIVE OR-gate or XOR-gate 7. The logic values at the output of XOR-gate 7 for values at its inputs are shown in Figure 3.

This logic-gate 7 is selected because during start-up phase, when all output voltages UB2 of the SMPS are low, also the output of the logic-gate 7 is low, thus solve the latch problem of the previous circuit. When any of the output voltages +4VS1, +4VS2, +5VS or +12VS is short-circuited, the output of the XOR gate 7 will be HIGH, thus the opto-coupler IP002 will be turned on via transistor TP058 and causes TP025 to be turned off, hence disable the base drive to the main switching transistor and stop the SMPS from operating.

RP071 and CP071 create a RC time constant during a fault condition. When an output of UB2 is short-circuited, CP071 will be charged then to a voltage level before it turns on TP058. When the opto-coupler is turned on, the SMPS stops switching, and all output voltages UB2 will drop to zero volt. Then when the XOR-inputs are LOW, the output of the XOR-gate 7 will go LOW, thus discharging CP071 and release TP058, and at this time the SMPS will switch ON, as long as it starts to operate. If the output is still short-circuited, the XOR-gate 7 output will again go HIGH and shut down the SMPS. This cycle will continue, until the fault condition is removed.

This mode of operation also helps in the case of an accidentally short circuited condition, which accomplishes one of said objectives: To remove the hassle to replace the fuse every time when there is an accidentally short-circuit at the output voltage, thus achieving cost saving during development and manufacturing phase.

The RC-time constant also helps to create a time delay during start-up because not all output voltages will rise at the same time, so there is still a split second of the time that the output of the XOR-gate 7 will be HIGH, so this RC combination actually helps to prevent the opto-coupler from conducting in the start-up phase.

Figures 4 and 5 provide tables showing an overview of the status of the circuit components with regard to Figures 1 and 2 for the three operating modes standby, normal operation, and mode with activated protection as described above. As can be seen with regard to Fig. 5, the circuit of Figure 2 uses a different logic as compared with the circuit of Figure 1. In standby mode, the switching signal Us is "HIGH", and therefore transistor TP072 is no more necessary. Also, the output of XOR-gate 7 is coupled to the gate of transistor TP058, for switching TP058 on, when the output of the XOR-gate is "HIGH".

## Claims

1. Switched mode power supply adapted for normal operating mode and for standby mode, comprising a power switching transistor in series with the primary winding of a transformer and a further transistor (TP025) arranged at the primary side of said power supply, further comprising a standby control circuit arranged at the secondary side and coupled to said further transistor (TP025) for switching to stand-by mode in response to a standby switching signal (Us), wherein a protection circuit (4) is provided having an output terminal (b) coupled to said standby control circuit for actuating also said transistor (TP026) in the event of a fault and having a control input terminal (a) connected to different output voltages (UB2) which are generated by the switched mode power supply unit, **characterized in that**
the control input terminal (a) is coupled to different control inputs of an XOR-gate (7) of the protection circuit (4), the XOR-gate (7) having an output terminal (b) which is coupled to said standby control circuit.

2. Switched mode power supply according to claim 1, **characterized in that** a time constant-network (RP071, CP071) is coupled to the output of said XOR-gate (7).

3. Switched mode power supply according to claim 1 or 2, **characterized in that** a first group (+4VS1, +4VS2) of said output voltages (UB2) is connected to a first input terminal of said XOR-gate (7), and that a second group (+5VS, +12VS) of said output voltages (UB2) is connected to a second input terminal of said XOR-gate (7).

4. Switched mode power supply according to claim 3, **characterized in that** the input terminals of said XOR-gate (7) are each connected via a resistor (10K) to an operating voltage (UB1), and that each output voltage (UB2) is connected via a series circuit of a diode (6) and a resistor (5) to an input terminal of said XOR-gate (7).

5. Switched mode power supply according to one of.the preceding claims, charactersized in that the standby control circuit is coupled via an opto-coupler (IP002) to said further transistor (TP025).

## Patentansprüche

1. Schaltstromversorgung, die für eine Normalbetriebsart und für eine Bereitschaftsbetriebsart ausgelegt ist und die einen Leistungsschalttransistor in Reihe mit einer Primärwicklung eines Transformators und einen weiteren Transistor (TP025), der auf der Primärseite der Stromversorgung angeordnet ist, umfasst und ferner eine Bereitschaftssteuerschaltung, die auf der Sekundärseite angeordnet und mit dem weiteren Transistor (TP025) gekoppelt ist, um in Reaktion auf ein Bereitschaftsschaltsignal (Us) in die Bereitschaftsbetriebsart zu schalten, umfasst, wobei eine Schutzschaltung (4) vorgesehen ist, die einen Ausgangsanschluss (b) aufweist, der mit der Bereitschaftssteuerschaltung gekoppelt ist, um den Transistor (TP025) im Fall einer Störung ebenfalls zu betätigen, und die einen Steuereingangsanschluss (a) aufweist, der mit unterschiedlichen Ausgangsspannungen (UB2) verbunden ist, die durch die Schaltstromversorgung erzeugt werden, **dadurch gekennzeichnet, dass**
der Steuereingangsanschluss (a) mit unterschiedlichen Steuereingängen eines XOR-Gatters (7) der Schutzschaltung (4) gekoppelt ist, wobei das XOR-Gatter (7) einen Ausgangsanschluss (b) aufweist, der mit der Bereitschaftssteuerschaltung gekoppelt ist.

2. Schaltstromversorgung nach Anspruch 1, **dadurch gekennzeichnet, dass** mit dem Ausgang des XOR-Gatters (7) ein Zeitkonstantennetz (RP071, CP071) gekoppelt ist.

3. Schaltstromversorgung nach Anspruch 1 oder 2, **dadurch gekennzeichnet, dass** eine erste Gruppe (+4VS1, +4VS2) der Ausgangsspannungen (UB2) mit einem ersten Eingangsanschluss des XOR-Gatters (7) verbunden ist und dass ein zweite Gruppe (+5VS, +12VS) der Ausgangsspannungen (UB2) mit einem zweiten Eingangsanschluss des XOR-Gatters (7) verbunden ist.

4. Schaltstromversorgung nach Anspruch 3, **dadurch gekennzeichnet, dass** die Eingangsanschlüsse des XOR-Gatters (7) jeweils über einen Widerstand (10K) mit einer Betriebsspannung (UB1) verbunden sind und dass jede Ausgangsspannung (UB2) über eine Reihenschaltung einer Diode (6) und eines Widerstands (5) mit einem Eingangsanschluss des XOR-Gatters (7) verbunden ist.

5. Schaltstromversorgung nach einem der vorhergehenden Ansprüche 1, **dadurch gekennzeichnet, dass** die Bereitschaftssteuerschaltung über einen Optokoppler (IP002) mit dem weiteren Transistor (TP025) gekoppelt ist.

## Revendications

1. Alimentation en mode commuté adaptée pour un mode de fonctionnement normal et pour un mode veille, comprenant un transistor de commutation de puissance en série avec l'enroulement primaire d'un transformateur et un transistor supplémentaire (TP025) disposé sur le premier côté de ladite alimentation, comprenant en outre un circuit de commande en veille, disposé sur le second côté et couplé audit transistor supplémentaire (TP025) pour commuter en mode veille en réponse à un signal (Us) de commutation en veille, où un circuit (4) de protection est fourni comportant une borne (b) de sortie couplée audit circuit de commande en attente pour commander également ledit transistor (TP025) en cas de défaillance et ayant une borne (a) d'entrée de commande connectée à différentes tensions (UB2) de sortie générées par l'unité d'alimentation en mode commuté, **caractérisée en ce que**
la borne (a) d'entrée de commande est couplée à différentes entrées de commande d'une porte OU exclusive (7) du circuit (4) de protection, la porte OU exclusive (7) comportant une borne (b) de sortie couplée audit circuit de commande en veille.

2. Alimentation en mode commuté selon la revendication 1, **caractérisée en ce qu'**un réseau permanent (RP071, CP071) est couplé à la sortie de ladite porte OU exclusive (7).

3. Alimentation en mode commuté selon la revendication 1 ou 2, **caractérisée en ce qu'**un premier groupe (+4VS1, +4VS2) desdites tensions (UB2) de sortie est connecté à une première borne d'entrée de ladite porte OU exclusive (7), et **en ce qu'**un second groupe (+5VS, +12VS) desdites tensions (UB2) de sortie est connecté à une seconde borne d'entrée de ladite porte OU exclusive (7).

4. Alimentation en mode commuté selon la revendication 3, **caractérisée en ce que** les bornes d'entrée de ladite porte OU exclusive (7) sont chacune connectées via une résistance (10K) à une tension (UB1) de fonctionnement, et **en ce que** chaque tension (UB2) de sortie est connectée via un circuit série d'une diode (6) et d'une résistance (5) à une borne d'entrée de ladite porte OU exclusive (7).

5. Alimentation en mode commuté selon une quelconque des revendications précédentes, **caractérisée en ce que** le circuit de commande en veille est couplé via un photocoupleur (IP002) audit transistor supplémentaire (TP025).
